# EUROPÄISCHE PATENTSCHRIFT

(11) **EP 0 891 798 B1**
(45) Veröffentlichungstag und Bekanntmachung des Hinweises auf die Patenterteilung: **29.11.2006**
(21) Anmeldenummer: 97810498.2
(22) Anmeldetag: 16.07.1997
(51) Int. Cl.: B01D 9/00

(54) **Verfahren zur fraktionierten Kristallisation von Substanzen, zur Durchführung des Verfahrens geeigneter Kristallisator, sowie Verwendung des Kristallisators**
Process for fractionated crystallising substances, crystallizer siuted to perform the process and use of the crystallizer
Procédé pour la cristallisation fractionnée de substances, cristallisateur approprié pour réaliser le procédé et l'utilisation du cristallisateur

(43) Veröffentlichungstag der Anmeldung: 20.01.1999
(73) Patentinhaber: Sulzer Chemtech AG, 8404 Winterthur (CH)
(72) Erfinder: Stepanski, Manfred, Dr., 9470 Buchs (CH); Jans, Bernhard J., 9470 Buchs (CH)
(74) Vertreter: Riederer, Conrad A.

(56) Entgegenhaltungen:
- EP-A- 0 218 545
- EP-A- 0 728 508
- DE-A- 1 443 066
- US-A- 3 272 875

## Beschreibung

Die vorliegende Erfindung betrifft ein Verfahren zur fraktionierten Kristallisation von Substanzen, deren Kristallisat an den senkrechten oder geneigten Kristallisationsflächen eines Kristallisators schlecht haftet.

Zur Fraktionierung von Substanzen durch Kristallisation wird durch Abkühlen einer Schmelze an Kristallisationsflächen ein Kristallisat gebildet, das die gewünschte Substanz enthält. Anschliessend wird die verbleibende flüssige Phase, die Mutterlauge, abgelassen. Danach werden durch Erwärmen des Kristallisats Fraktionen mit niedrigeren Schmelzpunkten ausgeschwitzt und abgelassen. Dadurch bleibt ein Kristallisat mit höherem Schmelzpunkt und hoher Reinheit zurück. Das gereinigte Kristallisat wird nun abgeschmolzen und so gewonnen. Mit diesem Verfahren war es jedoch bislang nicht möglich, Substanzen wie zum Beispiel Paraffine, Öle, Fette oder Wachse zu fraktionieren, da insbesondere in der Phase des "Partiellen Schmelzens" oder "Schwitzens", die Haftung zwischen den senkrechten Kristallisationsflächen und dem Kristallisat dieser Substanzen ungenügend ist, so dass sich Teile der Kristallisatschicht oder ganze Schichten lösen und abrutschen würden. Das abgerutschte Kristallisat läge dann auf dem Boden des Kristallisators und behinderte oder verunmöglichte eine saubere Trennung des Kristallisats von der Mutterlauge. Es besteht jedoch ein Bedarf dafür, auch solche, schlecht haftenden Substanzen mittels moderner Kristallisationstechnik zu fraktionieren. Die fraktionierte Kristallisation hat unter anderem den Vorteil, dass sie ohne Lösemittel arbeiten kann. Sie ist deshalb kostengünstiger und stellt weder eine Gefährdung für die Umwelt noch die Gesundheit der Menschen dar. Sie ist den vergleichbaren, aber veralteten Techniken, wie der Schwitzentölung von Paraffin, durch ihre kürzeren Arbeitszyklen, den sogenannten Batch- oder Stufen-Zeiten, aber auch durch präzisere Steuerbarkeit überlegen.

Die EP 0 728 508 offenbart einen Kristallisator mit einem Gehäuse zur Aufnahme einer zu kristallisierenden Flüssigkeit. Das Gehäuse ist durch eine Vielzahl von Rohren für ein Wärmetransfermittel durchsetzt. Die Rohre durchdringen die Wandungen des Gehäuses und verbinden gegenüberliegende Wandungen zugfest miteinander. Benachbarte horizontale Lagen von Rohren sind senkrecht zueinander ausgerichtet. Die Rohre sind mit Lamellen bestückt.

Die EP 0 218 545 offenbart eine Kristallisationsvorrichtung mit einem senkrecht angeordneten Rohrbündel, dessen Rohre mit einem Rieselfilm oder einer vollen Rohrströmung des zu behandelnden Flüssigkeitsgemisches beschickbar sind. Jedes Rohr des Rohrbündels ist mit Einbauten bestückt, welche die Oberfläche im Innern des Rohrs vergrössern. Dadurch wird eine kleinere lineare Wachstumsgeschwindigkeit der Kristalloberfläche erreicht. Die Einbauten ermöglichen auch bei schlecht haftendem Kristallisat eine grosse Rohrbeladung. Die Einbauten können perforierte Bleche sein. Die Bleche können auch eine Riffelung aufweisen. In den dargestellte Beispielen sind die Einbauten wie die Rohrwandung vertikal ausgerichtet.

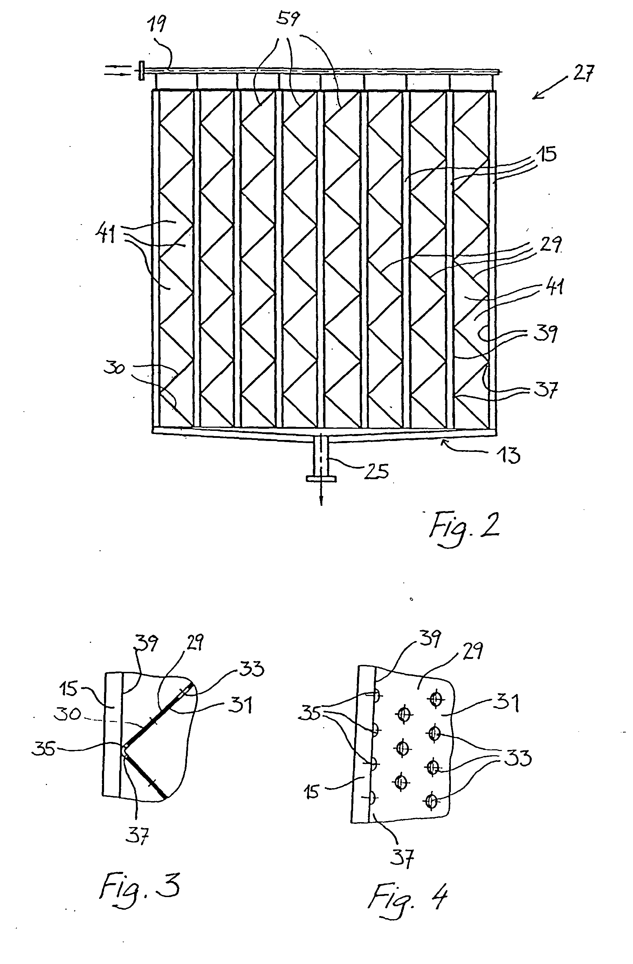

Die DE 1 443 066 offenbart ein Verfahren zur Raffination von Rohnaphtalin. Bei dem Verfahren wird Rohnaphtalin, das durch Abkühlen verfestigt wurde, langsam erwärmt, um das Schmelzen von Verunreinigungen zu bewirken. Die verflüssigten Verunreinigungen tropfen aus dem zurückbleibenden Produkt ab. Dabei reichert sich das zurückbleibende Produkt fortlaufend an. Das Naphtalin wird bei Erreichen der gewünschten Reinheit gewonnen. Diese Schrift offenbart auch eine Vorrichtung, die sich zur Durchführung des Verfahrens besonders zufriedenstellend erwiesen hat. Ein parallelflacher Trog ist mit einer Vielzahl von horizontalen Rohren durchsetzt. Die Rohre sind an eine Warmwasserquelle und eine Kaltwasserquelle anschliessbar. Jedes Rohr ist mit Flügeln versehen. Die Ränder der Flügel benachbarter Rohre sind soweit wie möglich einander angenähert. Diese Flügel bedingen eine grosse Austauschfläche und ein Hängenbleiben der kristallinen Masse des Rohnaphtalins während des fortschreitenden Schmelzens derselben. Die Schrift zeigt in Figur 3 ausserdem eine Vorrichtung mit einer Umlaufvorrichtung für eine Flüssigkeit, welche durch vertikalen Zellen gebildet ist. Die parallelen, senkrechten, plattenförmigen Zellen sind mit einem Sammler verbunden. Zwischen den Zellen verbleiben freie Räume für den Durchtritt des Rohnaphtalins. Zellen mit einer Höhe von 1,5 m haben sich als besonders zufriedenstellend erwiesen. Unterhalb der Umlaufvorrichtung und nahe über dem Boden der Vorrichtung ist eine Filtervorrichtung angeordnet, beispielsweise ein perforiertes Tuch oder Maschenwerk.

Es ist deshalb Aufgabe der Erfindung ein Verfahren bereitzustellen, mit welchem sich Substanzen, deren Kristallisat sich von den Kristallisationsflächen leicht lösen kann, durch Kristallisation in einem Kristallisator fraktionieren lassen, ohne dass dabei Kristallisat unkontrolliert abrutscht. Das Verfahren soll gegenüber früheren Verfahren schneller ablaufen und es soll eine höhere Ausbeute der gewünschten Fraktionen erreicht werden.

Erfindungsgemäss wird dies durch die Merkmale des Patentanspruchs 1 erreicht. Beim Schwitzen sich von den Kristallisationsflächen lösendes Kristallisat wird durch eine siebartige Stützstruktur derart gehalten, dass abrutschendes Kristallisat in der siebartigen Stützstruktur hängenbleibt und flüssige Fraktionen durch die siebartige Stützstruktur hindurchfliessen.

Durch die Stützstrukturen wird erreicht, dass die Kristallisatschicht sich nur in Teilbereichen ablösen kann und diese Teilbereiche in der siebartigen Stützstruktur hängen bleiben. Dadurch bleibt die Trennung der flüssigen und der kristallinen Phase oder der Fraktionen möglich, weil die Kristallisatschicht nicht gänzlich abrutschen und damit die Zwischenräume zwischen den Kristallisationsflächen sowie den Auslass für die Schmelze nicht verstopfen kann. Weil das Kristallisat sich nun von den Kristallisationsflächen lösen darf, kann das Kristallisat rascher gleichmässig erwärmt werden, was den gesamten Prozess beschleunigt. Die Siebartigkeit der Stützstruktur gewährleistet, dass flüssige Fraktionen abfliessen können, währenddem das Kristallisat gehalten wird.

Die siebartige Stützstruktur ist zweckmässigerweise den Kristallisationsflächen zugeneigt, denn durch diese Neigung wird sich lösendes, auf die geneigte Stützstruktur aufliegendes Kristallisat durch das Eigengewicht des Kristallisats gegen die Kristallisationsfläche gedrückt und bleibt so in thermischem Kontakt mit der Wärmetauscher- oder Kristallisationsfläche.

Vorteilhaft werden die Kristallisatschichten von diese etwa horizontal in Streifen gliedernden Stützflächen der siebartigen Stützstruktur gehalten, wobei flüssige Fraktionen durch Öffnungen zwischen den Kristallisationsflächen und den Stützflächen abfliessen können. Das Kristallisat kann sich daher nur in Streifen ablösen, welche von den Stützflächen aufgefangen werden. Die Oberflächen der Streifen sind entsprechend den Stützflächen horizontal oder geneigt. Ihre Neigung begünstigt das Abfliessen ausgeschwitzter Fraktionen.

Vorteilhaft wird beim Ausschwitzen der flüssigen Fraktionen die Kristallisatschicht so angewärmt, dass sie sich wenigstens teilweise von der Kristallisationsfläche löst und auf der siebartigen Stützstruktur aufliegt. Dadurch werden die flüssigen Fraktionen auch durch das Eigengewicht des Kristallisats ausgetrieben. Die flüssige Phase fliesst sowohl zwischen den beiden Kristallisatschichten als auch zwischen der Kristallisatschicht und der erwärmten Kristallisationsfläche ab.

Vorteilhaft wird die durch das Kristallisationsverfahren erhaltenen Mutterlauge wenigstens ein weiteres Mal durch fraktionierte Kristallisation gereinigt, indem oben angeführte Verfahrensschritte auf die Mutterlauge angewendet werden. Ebenso ist es zweckmässig, dass die gewonnenen gereinigten Fraktionen durch herkömmliche fraktionierte Kristallisation ohne siebartige Stützstrukturen oder durch fraktionierte Kristallisation nach oben angeführten Verfahrensschritten mit siebartigen Stützstrukturen weiter fraktioniert werden. Oft lassen sich die gereinigten Fraktionen, sobald sie einen gewissen Reinheitsgrad aufweisen, in Kristallisatoren ohne siebartige Stützstruktur weiter reinigen. Diese reineren Fraktionen werden wenn die Haftung der reineren Fraktionen an den Kristallisationsflächen ausreicht, zweckmässigerweise durch konventionelle fraktionierte Kristallisation ohne Stützstruktur weiter fraktioniert und dadurch gereinigt. Andere, weniger haftende Fraktionen lassen sich mit dem erfindungsgemässen Verfahren mit Stützstrukturen im Kristallisator weiter reinigen.

Das erfindungsgemässe Verfahrens ist insbesondere für die Reinigung von Paraffinen, Ölen, Fetten und/oder Wachsen, sowie weiteren Substanzen mit ähnlichen physikalischen Eigenschaften geeignet.

Die Erfindung betrifft auch einen Kristallisator gemäss Oberbegriff des Patentanspruchs 8 mit durch ein Wärmetransfermedium kühl- und heizbaren Kristallisationsflächen zur Fraktionierung von Substanzen, deren Kristallisat schlecht an praktisch senkrechten oder geneigten Kristallisationsflächen haftet. Der Kristallisator weist erfindungsgemäss die Merkmale des kennzeichens des Patentanspruchs 8 auf.

Der erfindungsgemässe Kristallisator weist eine für die flüssige Phase bzw. flüssigen Fraktionen durchlässige, siebartige Stützstruktur zum Auffangen von sich von den Kristallisationsflächen lösendem Kristallisat auf. Der erfindungsgemässe Kristallisator erweist sich dadurch als geeignet zur Durchführung des erfindungsgemässen Verfahrens.

Zweckmässigerweise sind diese siebartigen Stützstrukturen den Kristallisationsflächen zugeneigt. Die Neigung bewirkt, dass das sich lösende Kristallisat in thermischem Kontakt mit den Kristallisationsflächen oder Wärmetauscherflächen bleibt. Dadurch ist die Wärmeübertragung praktisch konstant gleich gut und der Kristallisationsprozess besser leitbar und rascher durchführbar.

Vorteilhaft weist die siebartige Stützstruktur den Raum zwischen den Kristallisationsflächen etwa horizontal gliedernde, geneigte Flächen auf. Diese Flächen unterteilen die Kristallisatschichten in Streifen.
Die Kristallisatschicht löst sich dadurch nur in eine vorherbestimmbare Maximalgrösse aufweisenden Teilen von der Kristallisationsfläche ab. Diese Teile bleiben in der siebartigen Stützstruktur hängen. Damit ist einer Verstopfung der Zwischenräume zwischen den Kristallisationsflächen durch herabfallendes Kristallisat wirksam vorgebeugt. Das auf den Flächen aufliegende Kristallisat treibt zusätzlich durch sein Eigengewicht flüssige Fraktionen aus. Die Mutterlauge oder flüssige Phase kann weiterhin über die Kristallisatteile hinweg und zwischen diesen hindurch abtropfen. Auf den Flächen der siebartigen Stützstruktur ist das Abfliessen der flüssigen Phase durch die Neigung der Flächen ebenfalls gewährleistet.

Vorteilhaft sind übereinander angeordnete geneigte Flächen der siebartigen Stützstruktur gegenläufig geneigt. Dadurch wird erreicht, dass das Kristallisat gleichmässig beiden benachbarten Kristallisationsflächen zugeordnet wird.

Vorteilhaft steht eine solche siebartige Stützstruktur in thermischem Kontakt mit den Kristallisationsflächen, damit insbesondere in der Schmelzphase die Wärmeübertragung von den Kristallisationsflächen auf das von den Kristallisationsflächen gelöste, auf der siebartigen Stützstruktur liegende Kristallisat optimal ist.

Vorzugsweise ist die siebartige Stützstruktur in Einbaueinheiten zusammengefasst, welche zwischen zwei Kristallisationsflächen eingebaut werden können. Sie ist dadurch einfach herstellbar und einbaubar.

Vorzugsweise ist die siebartige Stützstruktur durch ein mehrfach zickzackförmig abgekantetes Metallelement gebildet. Metall bietet die notwendige Wärmeleitfähigkeit und die vorteilhafte einfache Bearbeitbarkeit. Die Zickzackform ist durch Biegen des Elements leicht herstellbar und weist die bevorzugten Eigenschaften auf, wie sie oben beschrieben wurden. Das Metallelement kann ein abgekantetes Lochblech sein. Dabei ist beim Abkanten des Lochblechs darauf zu achten, dass die Kante über Öffnungen oder Löcher im Blech verläuft, damit im eingebauten Zustand am tiefsten Punkt der geneigten Stützfläche zwischen Lochblechkante und Kristallisationsfläche in Abständen Öffnungen vorhanden sind, durch welche die flüssigen Fraktionen ablaufen können. Die metallische Einbaute kann aber auch ein Stabgitter oder ein Netz oder dergleichen sein. Lochbleche gibt es im Handel in einer grossen Vielfalt von verschiedenen Lochungen. Vorteilhaft wird ein Perforationsmuster gewählt, bei welchem das Muster derart ineinander greift, dass bei jeder möglichen Anordnung der Faltlinie die Faltlinie durch Öffnungen in der siebartigen Stützstruktur verläuft.

Neben den oben ausgeführten bevorzugten Ausführungsformen können solche siebartigen Stützstrukturen verschiedenste Ausführungsformen aufweisen. So sind beispielsweise auch schwammartige und filzartige Strukturen, Raumgitter, Gewebe, Netze, Streckmetall, Bürsten sowie Raschidringe oder ähnliche Füllkörper möglich. Die Stützstrukturen können überdies neben Metall auch aus verschiedenen anderen Materialien bestehen, z.B. Keramik, Kunststoff, Glas, Kohle und/oder textilen Fasern pflanzlichen oder tierischen Ursprungs.

Zweckmässigerweise können die Kristallisationsflächen selber geneigt sein, wodurch der Kontakt zwischen sich lösendem Kristallisat und Wärmetauscherfläche ebenfalls aufrechterhalten bleibt und die ausgeschwitzten Fraktionen auch gut abfliessen können.

Der erfindungsgemässe Kristallisator kann ein Fallfilmkristallisator oder ein statischer Kristallisator sein. Für die Fraktionierung von Substanzen, deren Kristallisat an den Kristallisationsflächen schlecht haftet, insbesondere für die Entölung von Paraffin, wird die statische Kristallisation bevorzugt.

Die Erfindung betrifft auch eine Anordnung von mehreren Kristallisatoren zur mehrstufigen Fraktionierung von Substanzen, deren Kristallisat sich leicht von den senkrechten oder geneigten Kristallisationsflächen eines Kristallisators lösen kann.

Die erfindungsgemässe Anordnung von Kristallisatoren weist wenigstens einen Kristallisator mit siebartigen Stützstrukturen auf. Dadurch können Substanzen, deren gereinigtes Kristallisat genügend Haftung aufweist für die Fraktionierung in herkömmlichen Kristallisatoren in wenigstens einer ersten Stufe in einem Kristallisator mit den erfindungsgemässen Stützstrukturen gereinigt werden.

Durch das beschriebene Verfahren, den beschriebenen Kristallisator und die beschriebene Anordnung von Kristallisatoren können insbesondere Paraffine, Fette, Wachse, Öle und andere Substanzen mit ähnlichen physikalischen Eigenschaften fraktioniert oder gereinigt werden.

Nachfolgend werden Ausführungsbeispiele der Erfindung unter Bezugnahme auf die Figuren beschrieben. Es zeigt:
- Fig. 1: einen dem Stand der Technik entsprechenden Kristallisator für die statische Kristallisation, perspektivisch und zum Teil aufgeschnitten dargestellt,
- Fig. 2: einen schematischen Vertikalschnitt durch einen erfindungsgemäss bestückten Kristallisator,
- Fig. 3: Detail des Berührungspunktes der Einbaute mit der Kristallisationswandung,
- Fig. 4: Aufsicht auf die in Figur 3 gezeigte Stelle,
- Fig. 5: einen schematischen Vertikalschnitt durch einen erfindungsgemässen Kristallisator, relativ zum Schnitt in Fig. 2 um 90 Grad gedreht,
- Fig. 6: eine mögliche Ausgestaltung der Kristallisatschicht nach abgeschlossener Kristallisation,
- Fig. 7: die Kristallisatschicht nach Figur 6 während des Schwitzens,
- Fig. 8: eine weitere mögliche Ausgestaltung der Kristallisatschicht nach abgeschlossener Kristallisation,
- Fig. 9: die Kristallisatschicht nach Figur 8 während des Schwitzens.

Der Übersichtlichkeit wegen werden im folgenden entsprechende Teile unterschiedlicher Kristallisatoren mit der gleichen Bezugsziffer bezeichnet, auch wenn die Ausführungsformen der Teile sich unterscheiden können.

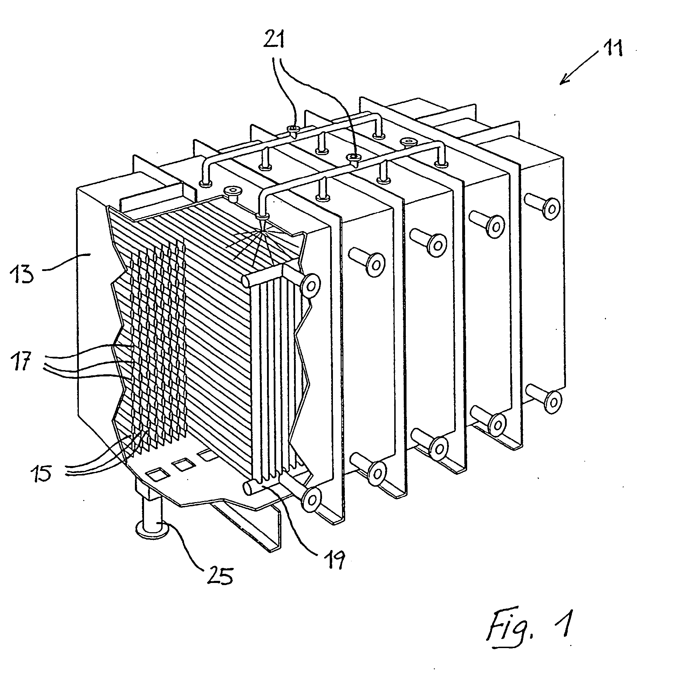

Ein Kristallisator 11 für die statische Kristallisation weist, wie in Figur 1 dargestellt, einen Behälter 13 zur Aufnahme der Schmelze und in diesem Behälter 13 mit Abstand zueinander eine Anzahl von kühl- und heizbaren Kristalisationswänden 15 auf. Nach dem Einfüllen der Schmelze sind diese Kristallisationswände 15 von der Schmelze vollständig umgeben. Die Kristallisationswände 15 weisen in ihrem Innern von einem Wärmetransfermedium durchfliessbare Kanäle 17 auf, die mit einer Verteilbatterie 19 verbunden sind.

Eine Schmelze wird über Einläufe 21 in den Behälter 13 eingespeist, wo sie an den gekühlten Kristallisationswänden 15 in Fraktionen auskristallisiert. Die nach der Kristallisation allenfalls verbleibende flüssige Phase wird über Ausläufe 25 abgelassen, danach werden durch Erwärmen der Kristallisationswände 15 im Kristallisat vorhandene Fraktionen und Restmengen unerwünschter Substanzen ausgeschwitzt und ebenfalls abgelassen, um schliesslich das durch dieses Verfahren reiner gewordene Kristallisat abzuschmelzen.

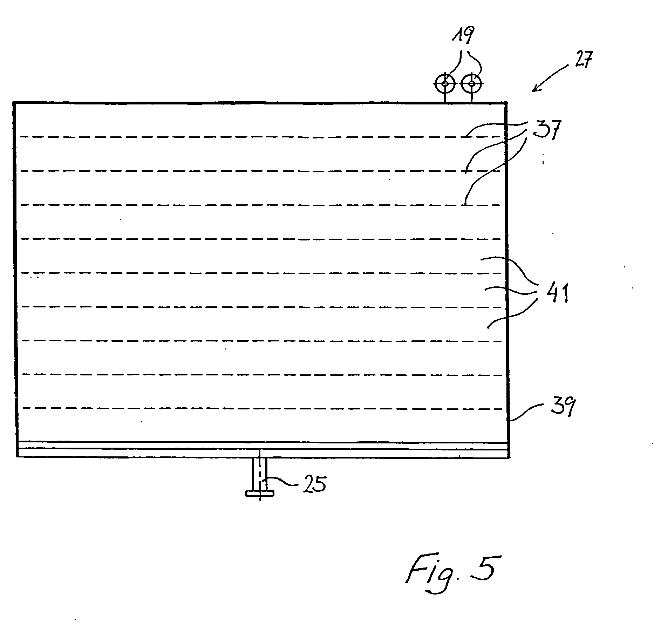

Eine bevorzugte Ausführungsform 27 des erfindungsgemässen Kristallisators ist in den Figuren 2 und 5 vereinfacht dargestellt. Zwischen den Kristallisationswänden 15 im Innern des Behälters 13 sind siebartige Stützstrukturen 29 angeordnet. Diese Stützstrukturen 29 sind aus Lochblechen 31 gefertigt (Figur 3 und 4). Die Lochung 33, 35 der Lochbleche 31 dient der Durchlässigkeit der siebartigen Stützstrukturen 29 für die flüssige Phase. Das Lochblech 29 ist im Zickzack gefaltet, so dass benachbarte Kanten 37 gegenüberliegende Kristallisationsflächen 39 berühren. Die Kanten 37 verlaufen praktisch horizontal (Figur 5). Eine Lochreihe 35 ist an der Lochblechkante 37 angeordnet, damit auch in den am tiefsten liegenden Bereichen der dreikantigen Zonen 41 die flüssige Phase ablaufen kann.

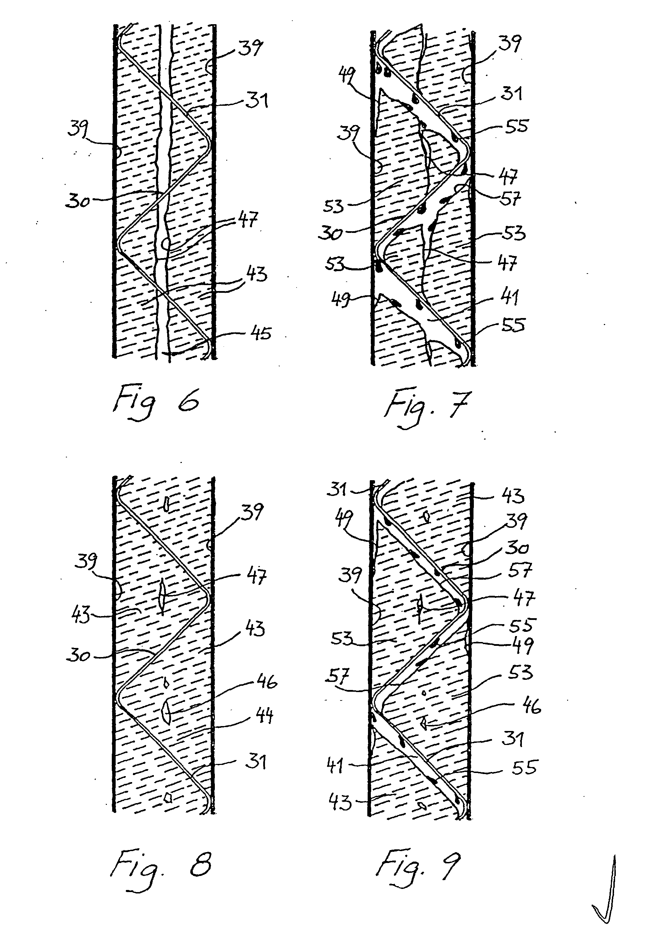

Wird nun in diesem Kristallisator z.B. Paraffin entölt, so bildet sich, wie in Figur 6 und 7, bzw. 8 und 9 dargestellt, auf den gekühlten Kristallisationsflächen 39 eine Kristallisatschicht 43. Zwischen den beiden Kristallisatschichten 43 bleibt je nach Produkt teilweise ein Zwischenraum 45 offen, über den die übrigbleibende Mutterlauge - welche einen hohen Ölanteil aufweist - abgelassen wird, oder die beiden Schichten 43 wachsen zu einer einzigen Schicht 44 zusammen, wobei zwischen den Schichten Einschlüsse 46 möglich sind (Fig. 9 und 10). In der Schwitzphase wird zuerst die ölige Fraktion durch die zentrale Oberflächen 47 der Kristallisatschichten 43 ausgeschwitzt. Sobald die Kristallisatschicht 43 durch die Erwärmung aufgeweicht ist, ist ihre Haftfähigkeit an der Kristallisationsfläche 39 reduziert. Spätestens, wenn durch die Erwärmung die haftende Oberfläche 49 der Kristallisatschicht 43 angeschmolzen wird, lösen sich Teile 53 der Kristallisatschicht 43 von der Kristallisationsfläche 39. Diese Teile 53 bleiben im in spitzem Winkel auf die Kristallisationsfläche 39 stossenden Lochblech 31 hängen. Durch die Ablösung von der Kristallisationsfläche 39 wird die schwitzfähige Oberfläche der Kristallisatschicht 43 vergrössert. Die flüssige Phase 55 kann an der zentralen Oberfläche 47 und an der kristallisationsflächenseitigen Oberfläche 49 austreten. Das Austreiben der flüssigen Phase wird durch den Druck des Eigengewichts des Kristallisatteils 53 begünstigt. Die flüssige Phase 55 tropft zwischen den Kristallisatteilen 53 ab. Zum Teil läuft die flüssige Phase 55 an den Kristallisationsflächen 39 ab. Die kristallisationsflächenseitige Oberfläche 49 der Kristallisatteile 53 wird durch die Zufuhr von Wärme angeschmolzen, so dass die flüssige Phase 55 Kanäle findet oder sich freischmilzt zwischen Kristallisationsfläche 39 und Kristallisatteilen 53 und durch die Öffnungen 35 an den die Kristallisationsflächen 39 berührenden Kanten 37 der Lochbleche 31 abfliessen. Mutterlauge 55, die auf Kristallisatteile 53 fällt, läuft über die geneigte Oberfläche 57 des Kristallisatteils 53 ab und tropft durch Löcher 33, 35 im Lochblech 31 hindurch in die nächstuntere dreikantige Zone 41.

## Patentansprüche

1. Verfahren zur fraktionierten Kristallisation von Substanzen, deren Kristallisat (53) an senkrechten oder geneigten Kristallisationsflächen (39) eines Kristallisators (11) ungenügend haftet, in einem Kristallisator (11) mit senkrechte oder geneigte Kristallisationsflächen (39) aufweisenden und von einem Wärmetransfermedium durchfliessbaren Kristallisationswänden (15), **dadurch gekennzeichnet, dass** beim Schwitzen sich von den Kristallisationsflächen (39) lösendes Kristallisat (53) durch eine zwischen zwei Kristallisationsflächen (39) angeordnete, siebartige, horizontale oder den Kristallisationsflächen (39) zugeneigte Stützstruktur (29) derart gehalten wird, dass abrutschendes Kristallisat (53) in der siebartigen Stützstruktur (29) hängenbleibt, flüssige Fraktionen (55) jedoch durch die siebartige Stützstruktur (29) hindurchfliessen.

2. Verfahren nach Anspruch 1, **dadurch gekennzeichnet, dass** das sich lösende Kristallisat (53) von den Kristallisationsflächen (39) zugeneigten siebartigen Stützstrukturen (29) gehalten wird.

3. Verfahren nach Anspruch 1 oder 2, **dadurch gekennzeichnet, dass** die Kristallisatschichten (43) von diese etwa horizontal in Streifen (41) gliedernden Stützflächen (30) der siebartigen Stützstruktur (29) gehalten werden, und flüssige Fraktionen (55) durch Öffnungen (35) zwischen den Kristallisationsflächen (39) und den Stützflächen (30) abfliessen.

4. Verfahren nach einem der Ansprüche 1 bis 3, **dadurch gekennzeichnet, dass** beim Ausschwitzen der flüssigen Fraktionen (55) die Kristallisatschicht (43) so angewärmt wird, dass sie sich wenigstens teilweise von der Kristallisationsfläche (39) löst und auf der siebartigen Stützstruktur (29) aufliegt, damit die flüssigen Fraktionen (55) auch durch das Eigengewicht des Kristallisats (53) ausgetrieben werden.

5. Verfahren nach einem der Ansprüche 1 bis 4, **dadurch gekennzeichnet, dass** die **dadurch** erhaltene Mutterlauge wenigstens ein weiteres Mal durch fraktionierte Kristallisation nach einem der Ansprüche 1 bis 4 gereinigt wird.

6. Verfahren nach einem der Ansprüche 1 bis 5, **dadurch gekennzeichnet, dass** die **dadurch** gewonnenen gereinigten Fraktionen durch herkömmliche fraktionierte Kristallisation oder durch fraktionierte Kristallisation nach einem der Ansprüche 1 bis 4 fraktioniert werden.

7. Verwendung des Verfahrens nach einem der Ansprüche 1 bis - 6 für die Reinigung von Paraffinen, Ölen, Fetten und/oder Wachsen, sowie weiteren organischen Produkten mit ähnlichen physikalischen Eigenschaften.

8. Kristallisator (11) mit senkrechte oder geneigte Kristallisationsflächen (39) aufweisenden und von einem Wärmetransfermedium durchfliessbaren Kristallisationswänden (15), welche Kristallisationsflächen (39) durch das Wärmetransfermedium kühl- und heizbar sind, zur Fraktionierung von Substanzen, deren Kristallisat (53) schlecht an den senkrechten oder geneigten Kristallisationsflächen (39) haftet, **gekennzeichnet durch** eine für die flüssige Phase (55) durchlässige, horizontale oder den Kristallisationsflächen (39) zugeneigte, siebartige Stützstruktur (29) zwischen zwei Kristallisationsflächen (39) zum Auffangen von sich von den Kristallisationsflächen (39) lösendem Kristallisat (53).

9. Kristallisator nach Anspruch 8, **dadurch gekennzeichnet, dass** die siebartige Stützstruktur (29) den Kristallisationsflächen (39) zugeneigt ist.

10. Kristallisator nach Anspruch 8 oder 9, **dadurch gekennzeichnet, dass** die siebartige Stützstruktur (29) den Raum zwischen den Kristallisationsflächen (39) etwa horizontal gliedernde Flächen (30) aufweist.

11. Kristallisator nach Anspruch 9 und 10, **dadurch gekennzeichnet, dass** übereinander angeordnete geneigte Flächen (30) der siebartigen Stützstruktur (29) gegenläufig geneigt sind.

12. Kristallisator nach einem der Ansprüche 8 bis 11, **dadurch gekennzeichnet, dass** die siebartige Stützstruktur (29) in thermischem Kontakt mit den Kristallisationsflächen (39) steht.

13. Kristallisator nach einem der Ansprüche 8 bis 12, **dadurch gekennzeichnet, dass** die siebartige Stützstruktur (29) in Einbaueinheiten (59) zusammengefasst ist, welche zwischen zwei Kristallisationsflächen (39) eingebaut werden können.

14. Kristallisator nach Anspruch 13, **dadurch gekennzeichnet, dass** die Einbaueinheit (59) ein mehrfach zickzackförmig geformtes Element (31) ist.

15. Statischer Kristallisator (11) nach einem der Ansprüche 8 bis 14.

16. Fallfilmkristallisator nach einem der Ansprüche 8 bis 14.

17. Anordnung von Kristallisatoren (11) zur mehrstufigen Fraktionierung von Substanzen, deren Kristallisat (53) sich leicht von den senkrechten oder geneigten Kristallisationsflächen (39) eines Kristallisators (11) löst, **dadurch gekennzeichnet, dass** wenigstens einer der Kristallisatoren (11) ein Kristallisator (11) gemäss einem der Ansprüche 8 bis 16 ist.

## Claims

1. Method for the fractionated crystallization of substances, the crystallized product (53) of which adheres insufficiently on vertical or inclined crystallization surfaces (39) of a crystallizer (11), in a crystallizer (11) with crystallization surfaces (15) having vertical or inclined crystallization surfaces (39) and which can be flown through by a heat transfer agent, **characterized in that** crystallized product (53) which works loose from the crystallization surfaces (39) during sweating is held by a sieve-type supporting structure (29) placed between two crystallization surfaces (39), horizontal or inclined to the crystallization surfaces (39), in such a manner that sliding off crystallized product (53) gets caught in the sieve-type supporting structure (29), however liquid fractions (55) flow through the sieve-type supporting structure (29).

2. Method according to claim 1, **characterized in that** the crystallized product (53) which works loose is held by the sieve-type supporting structures (29) inclined to the crystallization surfaces (39).

3. Method according to claim 1 or 2, **characterized in that** the crystallized product layers (43) are held by this sieve-type supporting structure (29) which separates these layers approximately horizontally into strips (41) and liquid fractions (55) flow off through openings (35) between the crystallization surfaces (39) and the supporting surfaces (30).

4. Method according to any of the claims 1 to 3, **characterized in that** during the exudation of the liquid fractions (55) the crystallization layer (43) is heated in such a manner that it works loose at least partially from the crystallization surface (39) and bears on the sieve-type supporting structure (29) so that the liquid fractions (55) are expelled also by the own weight of the crystallized product (53).

5. Method according to any of the claims 1 to 4, **characterized in that** the thus obtained mother liquor is purified at least one more time by fractionated crystallization according to any of the claims 1 to 4.

6. Method according to any of the claims 1 to 5, **characterized in that** the thus obtained purified fractions are fractionated by traditional fractionated crystallization or by fractionated crystallization according to any of the claims 1 to 4.

7. Use of the method according to any of the claims 1 to 6 for the purification of paraffins, oils, greases and/or waxes as well as further organic products with similar physical properties.

8. Crystallizer (11) with crystallization walls (15) having vertical or inclined crystallization surfaces (39) and which can be flown through by a heat transfer medium, which crystallization surfaces (39) can be cooled and heated by the heat transfer agent, for the fractionation of substances, the crystallized product (53) of which poorly adheres to the vertical or inclined crystallization surfaces (39), **characterized** through a sieve-type supporting structure (29) permeable for the liquid phase (55), horizontal or inclined to the crystallization surfaces (39) between two crystallization surfaces (39) for catching cristallized product (53) which is working loose from the crystallization surfaces (39).

9. Crystallizer according to claim 8, **characterized in that** the sieve-type supporting structure (29) is inclined to the crystallization surfaces (39).

10. Crystallizer according to claim 8 or 9, **characterized in that** the sieve-type supporting structure (29) has surfaces (30) separating the space between the crystallization surfaces (39) approximately horizontally.

11. Crystallizer according to claim 9 an 10, **characterized in that** inclined surfaces (30) of the sieve-type supporting structure (29) placed the one on the other are inclined in opposite direction.

12. Crystallizer according to any of the claims 8 to 11, **characterized in that** the sieve-type supporting structure (29) is in thermal contact with the crystallization surfaces (39).

13. Crystallizer according to any of the claims 8 to 12, **characterized in that** the sieve-type supporting structure (29) is combined in mounting units (59) which are mounted between two crystallization surfaces (39).

14. Crystallizer according to claim 13, **characterized in that** the mounting unit (59) is a multiple zigzag moulded element (31).

15. Static crystallizer (11) according to any of the claims 9 to 14.

16. Falling film crystallizer according to any of the claims 8 to 14.

17. Arrangement of crystallizers (11) for the multistage fractionation of substances, the crystallized product (63) of which easily works loose from the vertical or inclined crystallization surfaces (39) of a crystallizer (11), **characterized in that** at least one of the crystallizers (11) is a crystallizer (11) according to any of the claims 8 to 16.

## Revendications

1. Procédé pour la cristallisation fractionnée de substances dont le produit de la cristallisation (53) adhère insuffisamment aux surfaces de cristallisation (39) verticales ou inclinées d'un cristallisoir (11), dans un cristallisoir (11) avec des parois de cristallisation (15) qui présentent des surfaces de cristallisation (39) verticales ou inclinées et qui peuvent être traversées par un agent de transfert de chaleur, **caractérisé en ce que** lors du ressuage le produit de cristallisation (53) qui se détache des surfaces de cristallisation (39) est retenu par une structure de support (29) de type tamis, placée entre deux surfaces de cristallisation (39), horizontale ou inclinée vers les surfaces de cristallisation (39) de telle manière que du produit de cristallisation (53) qui glisse vers le bas reste suspendu dans la structure de support (29) de type tamis mais que des fractions liquides (55) passent à travers la structure de support de type tamis (29).

2. Procédé selon la revendication 1, **caractérisé en ce que** le produit de cristallisation (53) qui se détache est retenu par des structures de support (29) de type tamis qui sont inclinées vers les surfaces de cristallisation (39).

3. Procédé selon la revendication 1 ou 2, **caractérisé en ce que** les couches de cristallisation (43) sont maintenues par des surfaces de support (30) de la structure de support (29) de type tamis qui divisent ces couches à peu près horizontalement en bandes (41) et des fractions liquides (55) s'écoulent par des ouvertures (35) entre les surfaces de cristallisation (39) et les surfaces de support (30).

4. Procédé selon l'une des revendications 1 à 3, **caractérisé en ce que**, lors du ressuage des fractions liquides (55), la couche de produit de cristallisation (43) est chauffée de telle manière qu'elle se détache au moins partiellement de la surface de cristallisation (39) et repose sur la structure de support de type tamis (29) pour que les fractions liquides (55) soient expulsées également par le poids propre du produit de cristallisation (53).

5. Procédé selon l'une des revendications 1 à 4, **caractérisé en ce que** l'eau mère obtenue ainsi est nettoyée au moins une autre fois par la cristallisation fractionnée selon l'une des revendications 1 à 4.

6. Procédé selon l'une des revendications 1 à 5, **caractérisé en ce que** les fractions nettoyées ainsi obtenues sont fractionnées par la cristallisation fractionnée traditionnelle ou par la cristallisation fractionnée selon l'une des revendications 1 à 4.

7. Utilisation du procédé selon l'une des revendications 1 à 6 pour le nettoyage de paraffines, huiles, graisses et /ou cires ainsi que d'autres produits organiques avec des propriétés physiques semblables.

8. Cristallisoir (11) avec des parois de cristallisation (15) qui présentent des surfaces de cristallisation (39) verticales ou inclinées et pouvant être traversées par un agent de transfert de chaleur, lesquelles surfaces de cristallisation (39) peuvent être refroidies et chauffées par l'agent de transfert de chaleur, pour le fractionnement de substances dont le produit de cristallisation (53) adhère mal aux surfaces de cristallisation verticales ou inclinées (39), **caractérisé par** une structure de support de type tamis (29) perméable pour la phase liquide (55), horizontale ou inclinée vers les surfaces de cristallisation (39), entre deux surfaces de cristallisation (39) pour capter du produit de cristallisation (53) qui se détache des surfaces de cristallisation (39).

9. Cristallisoir selon la revendication 8, **caractérisé en ce que** la structure de support de type tamis (29) est inclinée vers les surfaces de cristallisation (39).

10. Cristallisoir selon la revendication 8 ou 9, **caractérisé en ce que** la structure de support de type tamis (29) présente des surfaces (30) qui divisent l'espace entre les surfaces de cristallisation (39) à peu près horizontalement.

11. Cristallisoir selon la revendication 9 et 10, **caractérisé en ce que** des surfaces (30) de la structure de support de type tamis (29) inclinées placées l'une au-dessus de l'autre sont inclinées en sens inverse.

12. Cristallisoir selon l'une des revendications 8 à 11, **caractérisé en ce que** la structure de support de type tamis (29) est en contact thermique avec les surfaces de cristallisation (39).

13. Cristallisoir selon l'une des revendications 8 à 12, **caractérisé en ce que** la structure de support de type tamis (29) est groupée en unités de montage (59) qui peuvent être montées entre deux surfaces de cristallisation (39).

14. Cristallisoir selon la revendication 13, **caractérisé en ce que** l'unité de montage (59) est un élément formé (31) en forme de zigzag multiple.

15. Cristallisoir statique (11) selon l'une des revendications 8 à 14.

16. Cristallistoir à film tombant selon l'une des revendications 8 à 14.

17. Arrangement de cristallisoirs (11) pour le fractionnement polyétagé de substances dont le produit de cristallisation (53) se détache légèrement des surfaces de cristallisation (39) verticales ou incinées d'un cristallisoir (11), **caractérisé en ce qu'**au moins l'un des cristallisoirs (11) est un cristallisoir (11) selon l'une des revendications 8 à 16.
